(19) Europäisches Patentamt
European Patent Office
Office européen des brevets

(11) **EP 4 156 029 A1**

(12) **EUROPEAN PATENT APPLICATION**

(43) Date of publication:
**29.03.2023 Bulletin 2023/13**

(21) Application number: **22182371.9**

(22) Date of filing: **30.06.2022**

(51) International Patent Classification (IPC):
***G06N 3/04*** *(2006.01)*    ***G06N 3/063*** *(2006.01)*
***G06F 17/15*** *(2006.01)*

(52) Cooperative Patent Classification (CPC):
**G06N 3/063; G06F 17/15; G06N 3/045**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.09.2021 KR 20210126395**

(71) Applicant: **Samsung Electronics Co., Ltd.
Suwon-si 16677 (KR)**

(72) Inventors:
• **PARK, Seungin**
  **16678 Suwon-si (KR)**
• **JUNG, Sangil**
  **16678 Suwon-si (KR)**
• **YOO, Byung in**
  **16678 Suwon-si (KR)**

(74) Representative: **Arnold & Siedsma
Bezuidenhoutseweg 57
2594 AC The Hague (NL)**

(54) **METHOD AND APPARATUS WITH DYNAMIC CONVOLUTION**

(57)    The present disclosure concerns a method with dynamic convolution comprising: determining kernel adaptation weights corresponding to weight matrices in a category set represented by a plurality of predetermined discrete values; determining a unified kernel based on the weight matrices and the kernel adaptation weights corresponding to the weight matrices; and performing a convolution operation based on the unified kernel. The present disclosure further concerns a method with dynamic convolution comprising determining discrete valued kernel adaptation weights for weight matrices based on input data, determining a unified kernel based on the weight matrices and the kernel adaptation weights corresponding to the weight matrices, and generating an output by performing convolution between the input data and the unified kernel.

FIG.1

EP 4 156 029 A1

## Description

BACKGROUND

1. Field

The following description relates to a method and apparatus with a dynamic convolution operation.

2. Description of Related Art

Diverse operations related to artificial intelligence (AI) may be performed in a user terminal to enhance user convenience.

In general, since an AI algorithm requires a large quantity of memory and computing, the AI algorithm may be performed via a standalone server or cloud service, and it may be difficult to perform the AI algorithm in a user terminal such as a smartphone.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a method with dynamic convolution comprises: determining kernel adaptation weights corresponding to weight matrices in a category set represented by a plurality of predetermined discrete values; determining a unified kernel based on the weight matrices and the kernel adaptation weights corresponding to the weight matrices; and performing a convolution operation based on the unified kernel.

The determining of the kernel adaptation weights may include: generating a plurality of kernel relevance scores corresponding to input data; and determining the kernel adaptation weights based on the kernel relevance scores.

The determining of the kernel adaptation weights based on the kernel relevance scores may include determining the kernel adaptation weights by performing Gumbel softmax sampling on the kernel relevance scores.

The determining of the kernel adaptation weights may include determining the kernel adaptation weights corresponding to the weight matrices in a category set represented by "0" and "1".

The determining of the unified kernel may include determining the unified kernel by summing weight matrices of which the kernel adaptation weights are determined to be "1".

The determining of the kernel adaptation weights may include, in a category set represented by "0" and "1", determining kernel adaptation weights that correspond to one of a plurality of weight matrices to be "1".

The determining of the unified kernel may include determining the one weight matrix as the unified kernel.

The determining of the kernel adaptation weights may include determining the kernel adaptation weights corresponding to the weight matrices in a category set represented by powers of "2".

The determining of the unified kernel may include performing a shift operation between each of the weight matrices and the kernel adaptation weights corresponding to the weight matrices.

The method may include: determining a unified bias based on biases and the kernel adaptation weights, wherein the performing of the convolution operation may include performing the convolution operation based on input data, the unified kernel, and the unified bias.

In another general aspect, one or more embodiments include a non-transitory computer-readable storage medium storing instructions that, when executed by one or more processors, configure the one or more processors to perform any one, any combination, or all operations and methods described herein.

In another general aspect, an apparatus with dynamic convolution comprises: one or more processors configured to: determine kernel adaptation weights corresponding to weight matrices in a category set represented by a plurality of predetermined discrete values; determine a unified kernel based on the weight matrices and the kernel adaptation weights corresponding to the weight matrices; and perform a convolution operation based on the unified kernel.

For the determining of the kernel adaptation weights, the one or more processors may be configured to: generate a plurality of kernel relevance scores corresponding to input data; and determine the kernel adaptation weights based on the kernel relevance scores.

For the determining of the kernel adaptation weights based on the kernel relevance scores, the one or more processors may be configured to determine the kernel adaptation weights based on the kernel relevance scores and determine the kernel adaptation weights by performing Gumbel softmax sampling on the kernel relevance scores.

For the determining of the kernel adaptation weights, the one or more processors may be configured to determine the kernel adaptation weights corresponding to the weight matrices in a category set represented by "0" and "1".

For the determining of the unified kernel, the one or more processors may be configured to determine the unified kernel by summing weight matrices of which the kernel adaptation weights are determined to be "1".

For the determining of the kernel adaptation weights, the one or more processors may be configured to, in a category set represented by "0" and "1", determine kernel adaptation weights that correspond to one of a plurality of weight matrices to be "1".

For the determining of the unified kernel, the one or more processors may be configured to determine the one weight matrix as the unified kernel.

For the determining of the kernel adaptation weights, the one or more processors may be configured to determine the kernel adaptation weights corresponding to the weight matrices in a category set represented by powers of "2".

For the determining of the unified kernel, the one or more processors may be configured to perform a shift operation between each of the weight matrices and the kernel adaptation weights corresponding to the weight matrices.

The one or more processors may be configured to: determine a unified bias based on biases and the kernel adaptation weights; and perform the convolution operation based on input data, the unified kernel, and the unified bias.

In another general aspect, a method with dynamic convolution comprises: determining discrete valued kernel adaptation weights for weight matrices based on input data; determining a unified kernel based on the weight matrices and the kernel adaptation weights corresponding to the weight matrices; and generating an output by performing convolution between the input data and the unified kernel.

The determining of the unified kernel may include selecting one of the weight matrices as the unified kernel.

The selecting of the one of the weight matrices may include selecting one of the weight matrices corresponding to a predetermined weight among the kernel adaptation weights.

The determining of the unified kernel may include: performing a shift operation on a plurality of the weight matrices based on the corresponding kernel adaptation weights; and determining the unified kernel by summing the shifted weight matrices.

Other features and aspects will be apparent from the following detailed description, the drawings, and the claims.

BRIEF DESCRIPTION OF THE DRAWINGS

FIG. 1 illustrates an example of a deep learning operation method using an artificial neural network.
FIG. 2 illustrates an example of a method of performing a dynamic convolution operation.
FIG. 3 illustrates an example of a method of determining a unified kernel.
FIG. 4 illustrates an example of a method of performing a dynamic convolution operation.
FIG. 5 illustrates an example of a method of performing a dynamic convolution operation.
FIG. 6 illustrates an example of a method of performing a dynamic convolution operation.
FIG. 7 illustrates an example of an apparatus for performing a dynamic convolution operation.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known in the art, after an understanding of the disclosure of this application, may be omitted for increased clarity and conciseness.

Although terms of "first" or "second" are used to explain various members, components, regions, layers, or sections, these members, components, regions, layers, or sections are not limited to the terms. Rather, these terms should be used only to distinguish one member, component, region, layer, or section from another member, component, region, layer, or section. For example, a "first" member, component, region, layer, or section referred to in examples described herein may also be referred to as a "second" member, component, region, layer, or section without departing from the teachings of the examples.

It should be noted that if it is described that one component is "connected", "coupled", or "joined" to another component, a third component may be "connected", "coupled", and "joined" between the first and second components, although the first component may be directly connected, coupled, or joined to the second component. On the contrary, it should be noted that if it is described that one component is "directly connected", "directly coupled", or "directly joined" to another component, a third component may be absent. Expressions describing a relationship between components, for example, "between", directly between", or "directly neighboring", etc., should be interpreted to be alike.

The singular forms "a", "an", and "the" are intended to include the plural forms as well, unless the context clearly indicates otherwise. As used herein, the term "and/or" includes any one and any combination of any two or more of the associated listed items. It should be further understood that the terms "includes," "comprises," and/or "comprising," when used in this specification, specify the presence of stated features, integers, steps, operations, elements, components or a combination thereof, but do not preclude the presence or addition of one or more other features, integers, steps, operations, elements, components, and/or groups thereof. The use of the term "may" herein with respect to an example or embodiment (for example, as to what an example or embodiment may include or implement) means that at least one example or embodiment exists where such a feature is included or implemented, while all examples are not limited thereto.

Unless otherwise defined, all terms used herein including technical or scientific terms have the same meaning as commonly understood by one of ordinary skill in the art to which examples belong after and understanding of the present disclosure. It will be further understood that terms, such as those defined in commonly-used dictionaries, should be interpreted as having a meaning that is consistent with their meaning in the context of the relevant art and the present disclosure, and will not be interpreted in an idealized or overly formal sense unless expressly so defined herein.

The examples may be implemented as various types of products, such as, for example, a personal computer (PC), a laptop computer, a tablet computer, a smart phone, a television (TV), a smart home appliance, an intelligent vehicle, a kiosk, and a wearable device. Hereinafter, examples will be described in detail with reference to the accompanying drawings. In the drawings, like reference numerals are used for like elements.

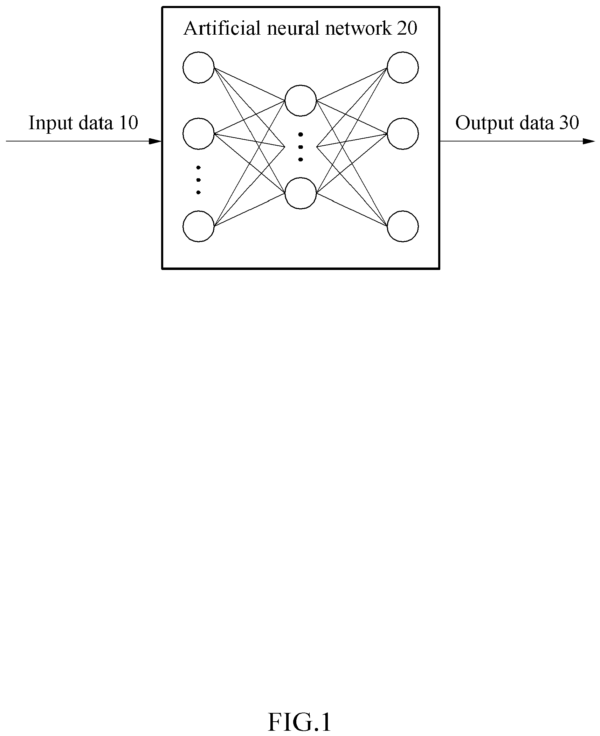

FIG. 1 illustrates an example of a deep learning operation method using an artificial neural network.

An artificial intelligence (AI) algorithm including deep learning may input data 10 to an artificial neural network (ANN), and may learn output data 30 through an operation, for example, a convolution. In the ANN, nodes may be connected to each other and collectively operate to process input data. Various types of neural networks may include, for example, a convolutional neural network (CNN), a recurrent neural network (RNN), a deep belief network (DBN), or a restricted Boltzmann machine (RBM), but are not limited thereto. In a feed-forward neural network, nodes may have links to other nodes. The links may be expanded in a single direction, for example, a forward direction, through a neural network. While the neural network may be referred to as an "artificial" neural network, such reference is not intended to impart any relatedness with respect to how the neural network computationally maps or thereby intuitively recognizes information and how a biological brain operates. I.e., the term "artificial neural network" is merely a term of art referring to the hardware-implemented neural network.

FIG. 1 illustrates a structure in which the input data 10 is input to the ANN and the output data 30 is output through the ANN (for example, a CNN 20) that includes one or more of layers. The ANN may be, for example, a deep neural network (DNN) including at least two layers.

The CNN 20 may be used to extract "features", for example, a border, a line, and a color from the input data 10. The CNN 20 may include a plurality of layers. Each of the layers may receive data, process data input to a corresponding layer, and generate data that is to be output from the corresponding layer. Data output from a layer may be a feature map generated by performing a convolution operation of an image or a feature map that is input to the CNN 20 and weight values of at least one filter. Initial layers of the CNN 20 may operate to extract features of a relatively low level, for example, edges or gradients, from an input. Subsequent layers of the CNN 20 may gradually extract more complex features, for example, an eye or a nose in an image.

A low-power and low-computational lightweight network may be used for running an AI algorithm in a mobile device such as a smartphone. For example, an ANN may be executed in an environment such as an application processor (AP) mounted on a smartphone or a microcontroller (MCU) having lower processing power.

For example, implementing dynamic convolution may increase a representation capacity of a network while alleviating a burden of an increase in operation quantity. Unlike typical convolution that has one convolution kernel per one layer, the dynamic convolution may learn a plurality sets of convolution kernels. Then, instead of a convolution operation being performed on each kernel, a final convolution operation may be performed after a plurality of convolution kernels have aggregated into one kernel using input image information.

Thus, using such dynamic convolution, a burden on an increase in operation quantity may not be significant compared to an increase in a number of kernels in use. In addition, a network accuracy may be improved since a kernel weight is dynamically adjusted according to input information.

However, typical dynamic convolution may have a limitation in an environment in which a use of computational resources is highly restricted such as an MCU.

More particularly, a typical convolution operation for an input x may be represented by Equation 1 shown below, for example.

$$\text{Equation 1:}$$

$$y = Wx + b$$

In Equation 1, W may denote a weight matrix of a convolution kernel and b may denote a bias. Thereafter, output data of each layer may be obtained by applying an appropriate activation function (for example, Relu and Sigmoid) to y.

On the other hand, a dynamic convolution operation may be represented by Equation 2 shown below, for example.

Equation 2:

$$y = \widetilde{W}x + \tilde{b}$$

In Equation 3, as shown below, a unified kernel $\widetilde{W}$ and a unified bias $\tilde{b}$ may be generated by a linear combination of $K$ weight matrices $W_k$ and $K$ biases $b_k$ respectively.

Equation 3:

$$\widetilde{W} = \sum_{k=1}^{K} \pi_k(x)W_k, \quad \tilde{b} = \sum_{k=1}^{K} \pi_k(x)b_k.$$

In Equation 3, a kernel adaptation weight $\pi_k$ corresponding to each weight matrix $W_k$ is required. A real number $\pi_k$ having a continuous value may be determined through a routing function performed on an input x. As shown in the equation, to obtain a final $\widetilde{W}$, multiplication operation of multiplying $W_k$ and $\pi_k$ by $K$ number of times and summation operation of summing all multiplication results by K number of times are required, and thus, computational overheads by $KC_{in}C_{out}D_k^2 + KC_{out}$ may occur in the typical dynamic convolution operation.

Furthermore, for weight lightening of a network, real number weights represented by floating point precision may be converted into integer type through a quantization process such that they use a smaller bit-width and may perform operation. Thus, using $\pi_k$ in a real number form in dynamic convolution may add burden on the quantization process of the typical dynamic convolution operation.

Dynamic convolution is proposed as a way to increase a representation capacity of a network while alleviating the burden of adding operation quantity since a low-power and low-computational lightweight network is used for running an AI algorithm in a mobile device such as a smartphone. However, the typical dynamic convolution operation method as described above may impose a burden of an additional quantization process for a kernel adaptation weight which is a real number. In addition, the typical dynamic convolution operation method may reduce operation efficiency since a full precision multiply and add (MAC) operation is required for performing kernel aggregation.

In contrast, a dynamic convolution operation method of one or more embodiments may reduce operation overhead and quantization error with respect to kernel aggregation in a dynamic operation by sampling a kernel adaptation weight $\pi_k$ in a category set represented by a discrete value. A more detailed description of non-limiting examples is provided below.

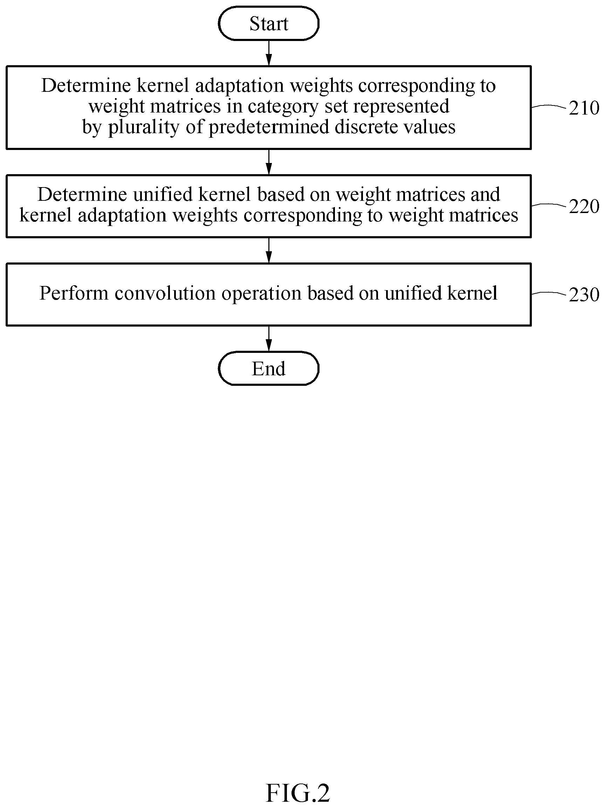

FIG. 2 illustrates an example of a method of performing a dynamic convolution operation.

Referring to FIG. 2, operations 210 to 230 may be performed by an apparatus for performing a dynamic convolution operation and the apparatus for performing a dynamic convolution operation may be implemented by one or more of hardware modules and/or one or more of hardware modules implementing one or more of software modules. Operations of FIG. 2 may be performed in the shown order and manner. However, the order of some operations may be changed, or some operations may be omitted, without departing from the scope of the shown example. The operations shown in FIG. 2 may be performed in parallel or simultaneously.

In operation 210, the apparatus for performing a dynamic convolution operation may determine kernel adaptation weights corresponding to weight matrices respectively in a category set represented by a plurality of predetermined discrete values. A number of elements and values included in the category set may be predetermined.

For example, the apparatus for performing a dynamic convolution operation may perform sampling on kernel adaptation weights corresponding to weight matrices in two categories represented by {0, 1}. Alternatively, the apparatus for performing a dynamic convolution operation may perform sampling on kernel adaptation weights corresponding to weight matrices in six categories represented by $\{2^1, 2^0, 0, 2^{-1}, 2^{-2}\ 2^{-3}\}$.

In operation 220, the apparatus for performing a dynamic convolution operation may determine a unified kernel based on weight matrices and kernel adaptation weights corresponding to the weight matrices. In a typical dynamic convolution operation, a full precision MAC operation between weight matrices and kernel adaptation weights corresponding to the weight matrices is required for calculating a unified kernel.

However, the apparatus for performing a dynamic convolution operation of one or more embodiments may determine a unified kernel without a full precision MAC operation.

In operation 230, the apparatus for performing a dynamic convolution operation may perform a convolution operation based on the unified kernel.

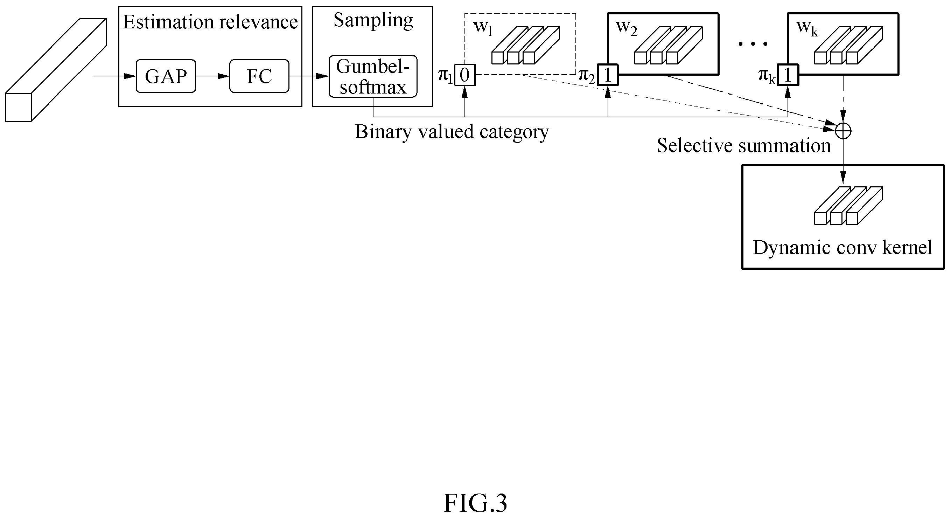

FIG. 3 illustrates an example of a method of determining a unified kernel. The description of FIGS. 1 to 2 is also applicable to the example of FIG. 3, and thus duplicate descriptions have been omitted.

Referring to FIG. 3, an apparatus for performing a dynamic convolution operation may include a kernel adaptation weight sampling module and a kernel composition module.

To perform sampling based on input data, the kernel adaptation weight sampling module may generate a plurality (for example, K) of kernel relevance scores by compressing the input data by performing global average pooling, "GAP," on the input data, and then, passing the compressed input data through a linear layer. The kernel relevance scores may be represented by logit.

Performing sampling may refer to modeling a discrete random variable. However, it may be difficult to express the discrete random variable using a typical neural network training method because a non-differentiable layer is generated since a slope is 0. Accordingly, the kernel adaptation weight sampling module may use a Gumbel softmax sampling method to learn a sampling module from a neural network.

More specifically, the kernel adaptation weight sampling module may determine kernel adaptation weights by performing Gumbel softmax sampling on a plurality (for example, K) of kernel relevance scores. More specifically, the kernel adaptation weight sampling module may determine one category that has the largest value by adding noise extracted from a Gumbel distribution to a plurality (for example, K) of kernel relevance scores and causing passing through a softmax layer. However, the sampling method is not limited to Gumbel softmax sampling and various types of sampling methods may be applied.

The kernel composition module may determine a unified kernel based on weight matrices and kernel adaptation weights corresponding to the weight matrices. The apparatus for performing a dynamic convolution operation may determine the unified kernel without performing a full precision MAC operation.

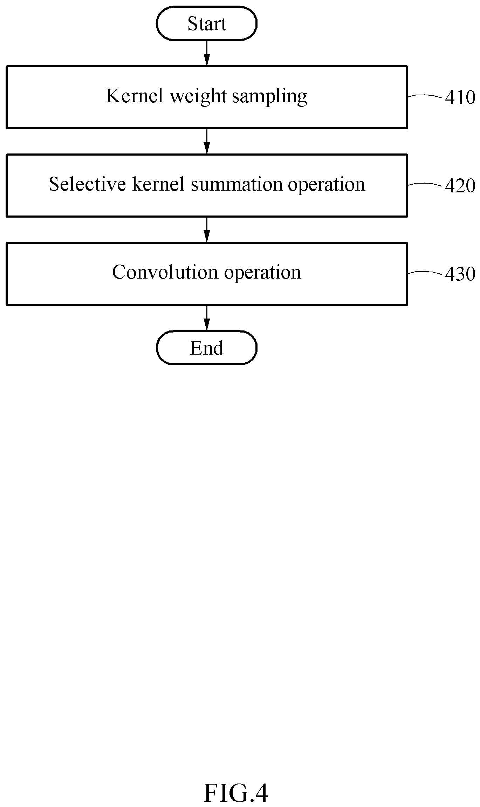

FIG. 4 illustrates an example of a method of performing a dynamic convolution operation. The description of FIGS. 1 to 3 is also applicable to the example of FIG. 4, and thus duplicate descriptions have been omitted.

Referring to FIG. 4, in operation 410, an apparatus for performing a dynamic convolution operation may be configured to perform sampling on kernel adaptation weights in two categories represented by {0, 1}.

In operation 420, the apparatus for performing a dynamic convolution operation may determine a unified kernel through selective kernel summation. For example, when a kernel adaptation weight $\pi_k$ corresponding to a weight matrix $W_k$ is sampled to be 0, the corresponding weight matrix $W_k$ may not need to be multiplied by the kernel adaptation weight $\pi_k$ (e.g., it may be determined that such multiplication is unnecessary, as the output may be 0). Accordingly, when a kernel adaptation weight $\pi_k$ corresponding to a weight matrix $W_k$ is sampled to be 0, the apparatus for performing a dynamic convolution operation may omit performing an operation on the corresponding weight matrix $W_k$ in a summation operation for generating a unified kernel $\tilde{W}$.

Conversely, when a kernel adaptation weight $\pi_k$ corresponding to a weight matrix $W_k$ is sampled to be 1, the weight matrix $W_k$ may not need to be multiplied by the kernel adaptation weight $\pi_k$ and may maintain the weight matrix $W_k$. Accordingly, when a kernel adaptation weight $\pi_k$ corresponding to a weight matrix $W_k$ is sampled to be 1, the apparatus for performing a dynamic convolution operation may generate a unified kernel W by performing a summation operation after selecting weight matrices $W_k$ of which kernel adaptation weights are 1.

In operation 430, the apparatus for performing a dynamic convolution operation that determines the unified kernel may perform a convolution operation based on the unified kernel.

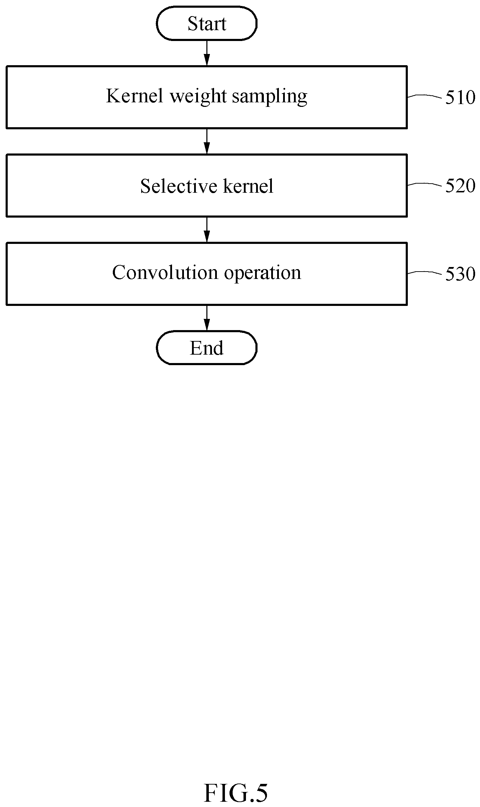

FIG. 5 illustrates an example of a method of performing a dynamic convolution operation. The description of FIGS. 1 to 3 is also applicable to the example of FIG. 5, and thus duplicate descriptions have been omitted.

Referring to FIG. 5, in operation 510, an apparatus for performing a dynamic convolution operation may be configured to perform sampling on kernel adaptation weights in two categories represented by {0, 1}. However, the apparatus for performing a dynamic convolution operation may train a kernel adaptation weight sampling module to select a kernel adaptation weight that corresponds to one of a plurality of weight matrices to be 1.

In operation 520, the apparatus for performing a dynamic convolution operation may determine a unified kernel through kernel selection.

Since only a kernel adaptation weight that corresponds to one of the weight matrices is sampled to be 1, the apparatus for performing a dynamic convolution operation may select a weight matrix $W_k$ of which a kernel adaptation weight $\pi_k$ is 1 without performing a summation operation for calculating the unified kernel and may determine it to be a final unified kernel.

In operation 530, the apparatus for performing a dynamic convolution operation that determines the unified kernel may perform a convolution operation based on the unified kernel.

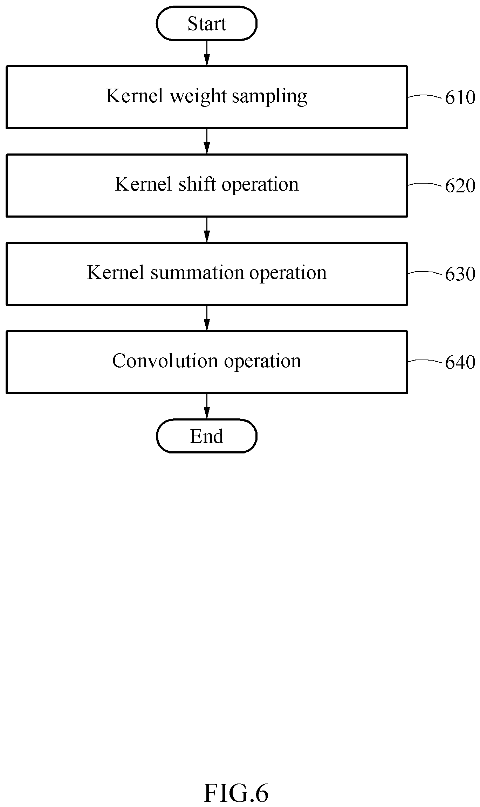

FIG. 6 illustrates an example of a method of performing a dynamic convolution operation. The description of FIGS. 1 to 3 is also applicable to the example of FIG. 6, and thus duplicate descriptions have been omitted.

Referring to FIG. 6, in operation 610, an apparatus for performing a dynamic convolution operation of one or more embodiments may increase a number of categories to increase the accuracy of the operation. In addition, representation values of each of the categories may be set to a number that satisfies a predetermined condition.

For example, the apparatus for performing a dynamic convolution operation may perform sampling in two categories represented by 0 and a power of 2. For example, the apparatus for performing a dynamic convolution operation may perform sampling on kernel adaptation weights corresponding to weight matrices in six categories represented by $\{2^1, 2^0, 0, 2^{-1}, 2^{-2}, 2^{-3}\}$.

In operation 620, the apparatus for performing a dynamic convolution operation may alleviate operation overhead by performing a shift operation that has better operation efficiency instead of performing a multiplication operation of a kernel adaptation weight $\pi_k$ and a weight matrix $W_k$.

In operation 630, the apparatus for performing a dynamic convolution operation may generate a final unified kernel by summing shifted weight matrices.

In operation 640, the apparatus for performing a dynamic convolution operation that determines the unified kernel may perform a convolution operation based on the unified kernel.

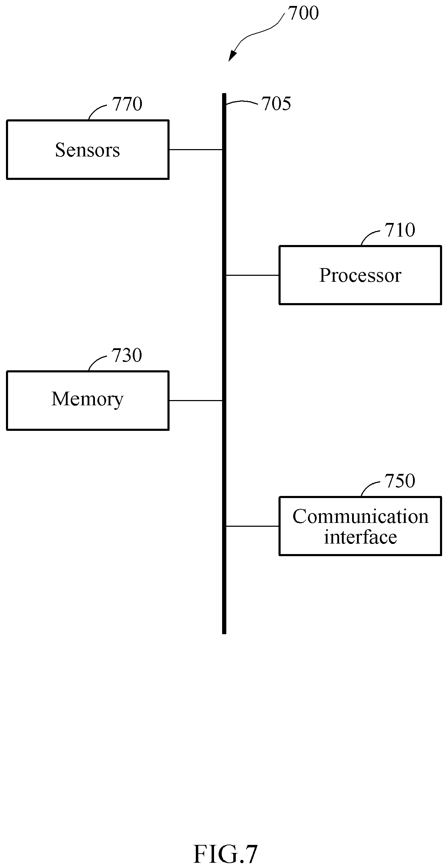

FIG. 7 illustrates an example of an apparatus for performing a dynamic convolution operation.

Referring to FIG. 7, an apparatus for performing a dynamic convolution operation 700 may include a processor 710 (e.g., one or more processors), a memory 730 (e.g., one or more memories), a communication interface 750, and sensors 770. The processor 710, the memory 730, the communication interface 750, and the sensors 770 may communicate with each other via a communication bus 707.

The processor 710 may be a hardware-implemented processing device having a physically structured circuit to execute desired operations. For example, the desired operations may include code or instructions included in a program. The hardware-implemented processing device may include, for example, a microprocessor, a central processing unit (CPU), a graphics processing unit (GPU), a processor core, a multi-core processor, a multiprocessor, an application-specific integrated circuit (ASIC), a field-programmable gate array (FPGA), a neural processing unit (NPU), a microcontroller (MCU) and the like.

The processor 710 may execute a program and control the apparatus for performing the dynamic convolution operation 700. Program codes to be executed by the processor 710 may be stored in the memory 730.

The processor 710 may determine kernel adaptation weights corresponding to weight matrices respectively in a category set represented by a plurality of predetermined discrete values, may determine a unified kernel based on the weight matrices and the kernel adaptation weights corresponding to the weight matrices, and may perform a convolution operation based on the unified kernel. The processor 710 may perform any one or more or all operations described above with reference to FIGS. 1-6.

The memory 730 may include a ROM 731 and an SRAM 733. The ROM 731 may store a neural network model and code for a dynamic convolution operation.

The SRAM 733 may be used as a working memory for operations performed by the processor 710 and may store various application programs. The memory 730 may store a variety of information generated in a processing process of the processor 710 described above. In addition, the memory 730 may store a variety of data and programs. The memory 730 may include a large-capacity storage medium such as a hard disk to store the variety of data.

The sensors 770 may include an image sensor. For example, the image sensor may detect a motion in image frames and may perform adjustment on at least a portion of regions in a target frame among the image frames based on whether the motion is detected. The image sensor may generate a trigger signal by detecting whether a target object is present by an adjusted target frame. The processor 710 may be activated by the trigger signal generated by the sensors 770 and may perform various application programs.

The apparatus for performing the dynamic convolution operation 700 may include devices in various fields, such as, for example, an advanced driver-assistance system (ADAS), a heads-up display (HUD), a 3D digital information display (DID), a navigation device, a neuromorphic device, a 3D mobile device, a smart phone, a smart appliance (for example, a smart TV, a smart refrigerator, a smart washing machine), a smart vehicle, an Internet of Things (IoT) device, a medical device, a measurement device, and the like. Here, the term 3D mobile device may be construed as meaning all such display devices, for example, a display device for displaying augmented reality (AR), virtual reality (VR), and/or mixed reality (MR), a head-mounted display (HMD), a face-mounted display (FMD), AR glasses, and the like.

Also, although not shown in the drawings, the apparatus for performing the dynamic convolution operation 700 may further include a display (not shown) and a communication interface (not shown). The display may be, for example, a touch display and/or a flexible display, but is not limited thereto.

The apparatuses, processors, memories, communication interfaces, sensors, communication buses, apparatus for performing a dynamic convolution operation 700, processor 710, memory 730, communication interface 750, sensors 770, communication bus 707, and other apparatuses, devices, units, modules, and components described herein with respect to FIGS. 1-7 are implemented by or representative of hardware components. Examples of hardware components that may be used to perform the operations described in this application where appropriate include controllers, sensors, generators, drivers, memories, comparators, arithmetic logic units, adders, subtracters, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-7 that perform the operations described in this application are performed by computing hardware, for example, by one or more processors or computers, implemented as described above executing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions in the specification, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

**Claims**

1. A computer-implemented method with dynamic convolution, the method comprising:

   determining kernel adaptation weights corresponding to weight matrices in a category set represented by a plurality of predetermined discrete values;
   determining a unified kernel based on the weight matrices and the kernel adaptation weights corresponding to the weight matrices; and
   performing a convolution operation based on the unified kernel.

2. The method of claim 1, wherein the determining of the kernel adaptation weights comprises:

   generating a plurality of kernel relevance scores corresponding to input data; and
   determining the kernel adaptation weights based on the kernel relevance scores.

3. The method of claim 2, wherein generating a plurality of kernel relevance scores corresponding to input data comprises:
   generate a plurality of kernel relevance scores by compressing the input data by performing global average pooling on the input data, and then, passing the compressed input data through a linear layer.

4. The method of claim 2 or 3, wherein the determining of the kernel adaptation weights based on the kernel relevance scores comprises determining the kernel adaptation weights by performing Gumbel softmax sampling on the kernel relevance scores.

5. The method of any of the claims 1-4, wherein the determining of the kernel adaptation weights comprises determining the kernel adaptation weights corresponding to the weight matrices in a category set represented by "0" and "1," wherein the determining of the unified kernel preferably further comprises determining the unified kernel by summing weight matrices of which the kernel adaptation weights are determined to be "1".

6. The method of any of the claims 1-5, wherein the determining of the kernel adaptation weights comprises, in a category set represented by "0" and "1", determining a kernel adaptation weight that corresponds to one of a plurality of weight matrices to be "1".

7. The method of claim 6, wherein the determining of the unified kernel comprises determining the one weight matrix as the unified kernel.

8. The method of any of the claims 1-7, wherein the determining of the kernel adaptation weights comprises determining the kernel adaptation weights corresponding to the weight matrices in a category set represented by powers of "2";
   wherein the determining of the unified kernel preferably comprises performing a shift operation between each of the weight matrices and the kernel adaptation weights corresponding to the weight matrices.

9. The method of any of the claims 1-8, further comprising:

   determining a unified bias based on biases and the kernel adaptation weights,
   wherein the performing of the convolution operation comprises performing the convolution operation based on input data, the unified kernel, and the unified bias.

10. A computer-implemented method with dynamic convolution, optionally the method of any of the previous claims, the method comprising:

   determining discrete valued kernel adaptation weights for weight matrices based on input data;
   determining a unified kernel based on the weight matrices and the kernel adaptation weights corresponding to the weight matrices; and
   generating an output by performing convolution between the input data and the unified kernel.

11. The method of claim 10, wherein the determining of the unified kernel comprises selecting one of the weight matrices as the unified kernel.

12. The method of claim 11, wherein the selecting of the one of the weight matrices comprises selecting one of the weight matrices corresponding to a predetermined weight among the kernel adaptation weights.

13. The method of claim 10, 11, or 12, wherein the determining of the unified kernel comprises:

   performing a shift operation on a plurality of the weight matrices based on the corresponding kernel adaptation weights; and
   determining the unified kernel by summing the shifted weight matrices.

14. A non-transitory computer-readable storage medium storing instructions that, when executed by one or more processors, configure the one or more processors to perform the method of any of the claims 1-13.

15. An apparatus with dynamic convolution, the apparatus comprising one or more processors configured to perform the method of any of the claims 1-13.

FIG.1

```
                          ┌──────────┐
                          │  Start   │
                          └──────────┘
                                │
                                ▼
┌──────────────────────────────────────────────────────┐
│   Determine kernel adaptation weights corresponding to │
│       weight matrices in category set represented      │──── 210
│      by plurality of predetermined discrete values     │
└──────────────────────────────────────────────────────┘
                                │
                                ▼
┌──────────────────────────────────────────────────────┐
│    Determine unified kernel based on weight matrices and│
│  kernel adaptation weights corresponding to weight matrices│──── 220
└──────────────────────────────────────────────────────┘
                                │
                                ▼
┌──────────────────────────────────────────────────────┐
│    Perform convolution operation based on unified kernel │──── 230
└──────────────────────────────────────────────────────┘
                                │
                                ▼
                          ┌──────────┐
                          │   End    │
                          └──────────┘
```

FIG.2

FIG.3

EP 4 156 029 A1

```
        ┌─────────────┐
        │    Start    │
        └─────────────┘
               │
               ▼
┌──────────────────────────────────┐
│      Kernel weight sampling      │────410
└──────────────────────────────────┘
               │
               ▼
┌──────────────────────────────────┐
│ Selective kernel summation operation │────420
└──────────────────────────────────┘
               │
               ▼
┌──────────────────────────────────┐
│      Convolution operation       │────430
└──────────────────────────────────┘
               │
               ▼
        ┌─────────────┐
        │     End     │
        └─────────────┘
```

# FIG.4

```
                        ┌──────────┐
                        │  Start   │
                        └────┬─────┘
                             │
                             ▼
        ┌────────────────────────────────────────┐
        │        Kernel weight sampling          │────  510
        └────────────────────┬───────────────────┘
                             │
                             ▼
        ┌────────────────────────────────────────┐
        │            Selective kernel            │────  520
        └────────────────────┬───────────────────┘
                             │
                             ▼
        ┌────────────────────────────────────────┐
        │          Convolution operation         │────  530
        └────────────────────┬───────────────────┘
                             │
                             ▼
                        ┌──────────┐
                        │   End    │
                        └──────────┘
```

FIG.5

Start

Kernel weight sampling — 610

Kernel shift operation — 620

Kernel summation operation — 630

Convolution operation — 640

End

FIG.6

FIG.7

Europäisches
Patentamt

European
Patent Office

Office européen
des brevets

# EUROPEAN SEARCH REPORT

**Application Number**

EP 22 18 2371

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PHAM PHUOC ET AL: "Improving Model Capacity of Quantized Networks with Conditional Computation", ELECTRONICS, vol. 10, no. 8, 8 April 2021 (2021-04-08), page 886, XP093006448, DOI: 10.3390/electronics10080886 * abstract; Sections 1 and 3-7; figures 1,3 * | 1-15 | INV. G06N3/04 G06N3/063 G06F17/15 |
| X | ADRIAN BULAT ET AL: "High-Capacity Expert Binary Networks", ARXIV.ORG, CORNELL UNIVERSITY LIBRARY, 201 OLIN LIBRARY CORNELL UNIVERSITY ITHACA, NY 14853, 7 October 2020 (2020-10-07), XP081780866, * abstract; Sections 1 and 3-6; figure 1 * | 1-15 | |
| A | CHEN YINPENG ET AL: "Dynamic Convolution: Attention Over Convolution Kernels", 2020 IEEE/CVF CONFERENCE ON COMPUTER VISION AND PATTERN RECOGNITION (CVPR), [Online] 31 March 2020 (2020-03-31), pages 11027-11036, XP055874974, DOI: 10.1109/CVPR42600.2020.01104 ISBN: 978-1-7281-7168-5 Retrieved from the Internet: URL:https://arxiv.org/pdf/1912.03458.pdf> * abstract; Sections 1 and 3-7; figures 2,3 * | 1-15 | **TECHNICAL FIELDS SEARCHED (IPC)**<br><br>G06N |

-/--

The present search report has been drawn up for all claims

| Place of search | Date of completion of the search | Examiner |
|---|---|---|
| The Hague | 12 December 2022 | Klasen, TJ |

Europäisches
Patentamt

European
Patent Office

Office européen
des brevets

# EUROPEAN SEARCH REPORT

Application Number

EP 22 18 2371

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | THEODORAKOPOULOS ILIAS ET AL: "Semantic Information in Gating Patterns of Dynamic Convolutional Neural Networks", 2021 12TH INTERNATIONAL CONFERENCE ON INFORMATION, INTELLIGENCE, SYSTEMS & APPLICATIONS (IISA), IEEE, 12 July 2021 (2021-07-12), pages 1-8, XP033984065, DOI: 10.1109/IISA52424.2021.9555567 [retrieved on 2021-09-30] * abstract; page 1 – page 8; figure 1 * | 1-15 | |
| A | CHEN JIN ET AL: "Dynamic Region-Aware Convolution", 2021 IEEE/CVF CONFERENCE ON COMPUTER VISION AND PATTERN RECOGNITION (CVPR), IEEE, 20 June 2021 (2021-06-20), pages 8060-8069, XP034007287, DOI: 10.1109/CVPR46437.2021.00797 [retrieved on 2021-10-15] * abstract; Sections 1 and 3-6; figures 1,2 * | 1-15 | TECHNICAL FIELDS SEARCHED (IPC) |

The present search report has been drawn up for all claims

| Place of search | Date of completion of the search | Examiner |
|---|---|---|
| The Hague | 12 December 2022 | Klasen, TJ |

EPO FORM 1503 03.82 (P04C01)